# EUROPÄISCHE PATENTSCHRIFT

(11) **EP 3 445 672 B1**
(45) Veröffentlichungstag und Bekanntmachung des Hinweises auf die Patenterteilung: **10.03.2021**
(21) Anmeldenummer: 17732299.7
(22) Anmeldetag: 19.04.2017
(51) Int. Cl.: B65D 35/22, C10L 7/04, A23L 5/10, A23L 13/00, A23P 20/18

(54) **VERFAHREN ZUM FLAMBIEREN VON GRILLGUT UND SPENDER ZUM AUFTRAGEN VON PASTÖSEN GRILLSAUCEN UND FLAMBIERPASTEN**
PROCESS FOR FLAMBÉING GRILLED FOOD AND DISPENSER FOR APPLYING PASTY BARBECUE SAUCES AND FLAMBÉ PASTES
PROCÉDÉ DE FLAMBAGE D'ALIMENTS GRILLÉS ET DISTRIBUTEUR D'APPLICATION DE SAUCES BARBECUE PÂTEUSES ET DE PÂTES FLAMBÉES

(30) Priorität: 20.04.2016 DE 102016004698
(43) Veröffentlichungstag der Anmeldung: 27.02.2019
(73) Patentinhaber: Windplussonne GmbH, 48599 Gronau (Westf.) (DE)
(72) Erfinder: LUTHE, Gregor, 48599 Gronau (Westf.) (DE); SCHMIDT, Nele, 48683 Ahaus (DE); MEYER, Robert, 48599 Gronau-Epe (DE)
(74) Vertreter: Münch, Volker
(86) Internationale Anmeldenummer: PCT/EP2017/000496
(87) Internationale Veröffentlichungsnummer: WO 2017/182121

(56) Entgegenhaltungen:
- DE-C- 820 268
- DE-T2-602004 007 923
- US-A- 3 239 105
- US-A- 3 964 880
- US-B1- 8 757 438

## Beschreibung

Die vorliegende Erfindung betrifft ein Verfahren zum Flambieren von Grillgut. Des Weiteren betrifft die vorliegende Erfindung einen Spender zur gleichzeitigen, separaten Applikation von pastösen Grillsaucen und Flambierpasten in Schichten auf Grillgut.

### Stand der Technik

Beim Flambieren in seiner einfachsten Form wird hochprozentiger oder reiner Alkohol über das Flambiergut gegossen und mithilfe einer Zündquelle entzündet. Der Alkohol, der sich zuvor auf der Oberfläche des Flambierguts verteilt hat, entzündet sich und brennt mit einer vergleichsweise kühlen Flamme ab. Nachteilig für dieses Verfahren ist, dass es eine Gefahrenquelle für Verpuffungen darstellt und weder der Alkohol, seine Dosierung noch die Ausbreitung der Flammen genau kontrolliert werden können, so dass das Verfahren daher viel Übung und Erfahrung erfordert. Insbesondere eignet sich das Verfahren nicht für die Massenproduktion von flambierten Lebensmitteln wie zum Beispiel Grillgut, das beispielsweise bei Volksfesten in großen Mengen möglichst rasch mit hohem Durchsatz hergestellt werden muss.

Es hat daher nicht an Versuchen gefehlt, Alternativen zu entwickeln, wie zum Beispiel Handflambierbrenner oder Karamellisierer. Diese können aber nicht für den vorstehend geschilderten Zweck verwendet werden.

Verschiedene Verfahren zum Kochen von Lebensmitteln mit Brennspiritus sind auch vorgeschlagen worden. So geht aus der Übersetzung der europäischen Patentschriften DE 60 2004 007 923 T2 ein Verfahren zum Kochen eines in einem Behälter angeordneten Nahrungsmittels, bei dem auf das Nahrungsmittel ein vorbestimmtes Volumen denaturierten Alkohols unter Beigabe von Aromaten geleert wird und der Alkohol entzündet und zur Gänze verbrannt wird. Die Verwendung von denaturiertem Alkohol wirft jedoch toxikologische Probleme auf.

Aus den beiden Gebrauchsmusterschriften DE 20 2015 007 804 U1 und DE 20 2015 004 434 U1 ist eine Anordnung zur Herstellung eines kakaohaltigen Getränks bekannt, das von seiner Konfiguration an die Herstellung von Feuerzangenbowle erinnert. Hierbei wird ein Gefäß für eine trinkbare Flüssigkeit mit einem oberhalb der Flüssigkeit positionierbaren Träger zur Aufnahme eines in dem Getränk zu lösenden, essbaren Bestandteils versehen. Innerhalb dieses ersten Bestandteils befindet sich ein mit hochprozentigem Alkohol getränkter, zweiter essbarer Bestandteil, der durch Flambieren den ersten und den zweiten Bestandteil verflüssigt, so dass die Bestandteile in die Trinkflüssigkeit tropfen.

Aus der der Britischen Offenlegungsschrift GB 2387310 A ist eine Kochflüssigkeit bekannt, die hergestellt wird, indem demineralisiertes Wasser, gratulierter Zucker, Mettesoro, Fruchtsäfte, naturidentische Geschmacksmittel, Alkohol, Gemüse, Kräuter und Fruchtadditive in einer sterilen Umgebung vermischt werden. Die Kochflüssigkeit ist für die Lagerung und Verpackung in einem Stahltank, Glasflaschen und anderen Containern geeignet. Die Flüssigkeit beschleunigt den Kochprozess und reduziert das Risiko während des Flambierens. Die Kochflüssigkeit kann jeglichen kommerziellen oder hausgemachten Saucen, Suppen, Hauptgerichten oder Desserts zugesetzt werden. Letztendlich muss sie aber genau wie reiner Alkohol über die Lebensmittel geschüttet werden, was die Kontrolle ihrer Verteilung in und auf den Lebensmitteln erschwert.

Aus der deutschen Patentschrift DE 2162045 ist ein Verfahren zur Herstellung eines genussfähigen alkoholhaltigen Feststoffs in Pulverform bekannt. Dabei wird eine Mischung aus Alkohol, Wasser und einem genussfähigen wasserlöslichen Material hergestellt und sprühgetrocknet. So kann zum Beispiel Whiskypulver mit einer Kaugummigrundlage vermischt werden und als Rohmaterial für die verschiedensten Süßwaren, für Instantgetränke usw. dienen.

Aus der deutschen Offenlegungsschrift DE 2315672 sind ebenfalls alkoholhaltige Pulvermassen bekannt. Der Alkoholgehalt der Pulver ist so hoch, dass sie entzündbar sind und weiter brennen. Zum Beispiel kann man ein Pulver aus alkoholhaltigen Dextrin über ein gegrilltes Steak streuen und anzünden. Das Material brennt mit geregelter blauer Flamme und wird gelöscht, bevor eine zu starke Verkohlung eintreten kann.

Allerdings weisen die alkoholhaltigen Pulver den Nachteil auf, dass sie nur schwer gleichmäßig auf der Oberfläche des Grillguts verteilt werden können. So kann es zu lokalen Ansammlungen von Pulvern kommen, die beim Flambieren besonders viel Hitze entwickeln und das Grillgut punktuell verbrennen. Außerdem ist nicht bekannt, wie die bekannten alkoholhaltigen Pulver mit pastösen Grillsaucen beim Flambieren zusammenwirken. Es ist jedoch auch hier zu befürchten, dass lokale Ansammlungen von Pulvern die Konsistenz und den Geschmack der Grillsaucen stellenweise schädigen.

Zwei- und Mehrkammertuben sind seit langem bekannt und aus unserem Alltag nicht mehr wegzudenken. Hierzu sei als Beispiel von vielen auf die Zahnpastatuben zu verweisen. Zum druckschriftlichen Stand der Technik mögen wenige Beispiele genügen: die amerikanischen Patente 1,535,529 und 3,239,105, die deutsche Patentschrift Nr. 820 268 - oder aus jüngerer Zeit - die internationalen Patentanmeldungen WO 98/14319, WO 02/051717 A1, WO 2005/080215 A1 oder WO 2006/131163 A1

Aus der Patentanmeldung US 3 964 880 A ist ein Verfahren zum Flambieren von Grillgut mit allen Merkmalen des Oberbegriffs des Anspruchs 1 bekannt.

Aus der Patentanmeldung US 8 757 438 B1 ist ein Spender mit zwei Kammern mit unterschiedlichen Volumen bekannt, welcher dem des Anspruchs 11 ähnlich ist.

### Die Aufgabe der vorliegenden Erfindung

Der vorliegenden Erfindung lag die Aufgabe zu Grunde, neue Spender zur gleichzeitigen, separaten Applikation von Flambierpasten und pastösen Grillsaucen in Schichten auf Grillgut zu finden, die unter anderem große Umsätze z.B. auf Volksfesten und Feiern ermöglichen.

Nicht zuletzt lag der vorliegenden Erfindung die Aufgabe zu Grunde, ein Flambierverfahren für Grillgut bereitzustellen, das keine Sicherheitsprobleme aufwirft.

Für das Verfahren wurden die Flambierpasten für Grillgut gefunden, die mindestens ein durch reinen Alkohol gequollenes und/oder geliertes Geliermittel und/oder Verdickungsmittel sowie reinen Alkohol in einer Konzentration, dass er die Verbrennung bis zu seinem vollständigen Verbrauch aufrechterhält, enthält.

Es wurde ein Verfahren zum Flambieren von Grillgut gefunden, bei dem man mindestens eine pastöse Grillsauce gleichzeitig und separat mit mindestens einer Flambierpaste auf das Grillgut aufträgt, sodass - in dieser Reihe übereinanderliegend - mindestens eine separate Schicht aus mindestens einer Flambierpaste und zugleich mindestens eine separate Schicht aus mindestens einer pastösen Grillsauce resultieren, und die Flambierpaste mit einer Zündquelle entzündet.

Im Folgenden wird das Verfahren zum Flambieren von Grillgut als »erfindungsgemäßes Flambierverfahren« bezeichnet.

Nicht zuletzt wurde ein Spender zum gleichzeitigen Auftragen von pastösen Grillsaucen und Flambierpasten auf das Grillgut gefunden, der ein Zwei- oder Mehrkammersystem umfasst und mit dem mindestens eine pastöse Grillsauce gleichzeitig und separat mit mindestens einer Flambierpaste auf das Grillgut auftragbar ist, sodass - in dieser Reihe übereinanderliegend - zugleich mindestens eine separate Schicht aus mindestens einer pastösen Grillsauce und mindestens eine separate Schicht aus mindestens einer Flambierpaste herstellbar ist.

Im Folgenden wird dieser Spender als »erfindungsgemäßer Spender« bezeichnet.

### Vorteile der Erfindung

Im Hinblick auf den Stand der Technik war es überraschend und für den Fachmann nicht vorhersehbar, dass die Aufgabe die der vorliegenden Erfindung zu Grunde lag, mithilfe des erfindungsgemäßen Flambierverfahrens und dem erfindungsgemäßen Spender gelöst werden konnte.

Der Alkoholgehalt der verwendeten Paste konnte genau eingestellt werden, so dass der Alkohol auf den zu flambierenden Grillsaucen - sowohl was die Menge als auch den Ort betrifft - genau dosiert werden konnte und daher keine Sicherheitsprobleme mehr hervorrief.

Außerdem boten diese Flambierpasten die Möglichkeit, neue Kombinationen von pastösen Grillsaucen und Flambierpasten zu finden.

Des Weiteren ermöglichte der erfindungsgemäßen Spender ohne Sicherheitsprobleme hohe Umsätze von flambiertem Grillgut, z.B. auf Volksfesten und Feiern.

### Ausführliche Beschreibung der Erfindung

Die in dem erfindungsgemäßen Verfahren zum Flambieren von Grillgut verwendete Flambierpaste für Grillgut enthält mindestens ein durch reinen Alkohol gequollenes und/oder geliertes Geliermittel und/oder Verdickungsmittel.

Im Rahmen der vorliegenden Erfindung sind unter Pasten fliessfähige Materialien zu verstehen, die in ihren Eigenschaften zwischen Feststoffen und Flüssigkeiten liegen. Man kann sie auch als hochviskose Flüssigkeiten bezeichnen.

Beispiele für Grillgut sind Lebensmittel wie Fleisch, Würste, Fisch, Krustentiere und Gemüse zu verstehen.

Reiner Alkohol ist Alkohol, der kein Vergällungsmittel enthält. Er kann aber Wasser, Aromastoffe, lebensmittelrechtlich zugelassene Farbstoffe und andere Stoffe, die auf dem Gebiet der Spirituosen üblicherweise verwendet werden, enthalten.

In den im erfindungsgemäßen Verfahren verwendeten Flambierpasten ist der Alkohol in einer Konzentration enthalten, dass er die Verbrennung bis zu seinem vollständigen Verbrauch aufrechterhält. Die Menge des Alkohols kann dabei stark variieren und daher hervorragend den Erfordernissen des Einzelfalls, wie zum Beispiel geschmacklichen Vorlieben, angepasst werden. Die Mengen können durch einfache Vorversuche ermittelt werden. Im Allgemeinen liegen sie, bezogen auf die Gesamtmenge der Flambierpasten, bei 5 bis 50 Gew.-%. Vor der Zugabe des Alkohols können die Geliermittel und/oder Verdickungsmittel mit Wasser angequollen werden.

Im Grunde können alle lebensmittelrechtlich zugelassene Geliermittel und/oder Verdickungsmittel verwendet werden. Vorzugsweise werden die Geliermittel und/oder Verdickungsmittel aus der Gruppe, bestehend aus Gelatine, Alginsäure, Natriumalginat, Kaliumalginat, Calciumalginat, Propylenglykolalginat, Agar-Agar, Carrageen, Furcelleran, Johannisbrotkernmehl, Guarkernmehl, Traganth, Gummiarabicum, Xanthan, Karaya, Tarakernmehl, Gellan, Pektine, amidierte Pektine, mikrokristalline Cellulose, Methylcellulose, Ethylcellulose, Hydroxypropylcellulose Hydroxypropylmethylcellulose, Methylethylcellulose, Carboxymethylcellulose, Natriumcarboxymethylcellulose, Gliadin, Secalin, Avenin, Hordein, Zein, Oryzin und Kafirin sowie den modifizierten Stärken E 1400, E 1401, E 1402, E 1403, E 1404, E 1405, E 1410, E 1412, E 1413, E 1414, E 1420, E 1421, E 1422, E 1423, E 1430, E 1440, E 1441, E 1442, E 1450 und E1451, ausgewählt.

Darüber hinaus können die verwendeten Flambierpasten Gewürze, Aromastoffe, lebensmittelrechtlich zugelassener Farbstoffe und/oder zerkleinerte, vorzugsweise pastöse, Lebensmittel wie Zwiebelpaste als Geschmacksträger enthalten.

Bei dem erfindungsgemäßen Flambierverfahren wird mindestens eine pastöse Grillsauce gleichzeitig und separat mit mindestens einer Flambierpaste schichtweise auf das Grillgut aufgetragen, sodass - in dieser Reihe übereinanderliegend - mindestens eine separate Schicht aus mindestens einer Flambierpaste und zugleich mindestens eine separate Schicht aus mindestens einer pastösen Grillsauce resultieren, wonach die Flambierpaste mit einer Zündquelle entzündet wird. Geeignete Zündquellen sind Gasbrenner, deren Flammen geruchslos und ohne Rußentwicklung brennen.

Für das erfindungsgemäße Flambierverfahren sind zahlreiche pastöse Grillsaucen und Würzsaucen geeignet. Ihre Auswahl richtet sich nach den geschmacklichen Vorlieben des Konsumenten des gegarten Grillguts. Beispiele geeigneter Grillsaucen und Würzsaucen sind
- A1 Steaksauce
- Austernsauce
- BBQ-Sauce
   - Classic
   - Spicy
   - Roasted Garlic
   - Honey
   - Sweet
   - Smokey and firey
- Chilisauce
- Chimichumi
- Chutney
- Cumberland-Sauce
- Fischsauce
- Fruchtsenfsauce
- Garum
- Hoisin Sauce
- HP - Sauce
- Ketchup
   - Curry
   - Chili mit verschiedenen Schärfegraden
   - Gewürze
   - 50% weniger Zucker
   - Bio
- Maggi-Würze
- Pesto
- Relish
- Sambal
- S - chug
- Senf
- Sriracha - Sauce
- Sojasauce
- Tabascosauce
- Teriyakisauce
- Worcestershiresauce
- Sweet and hot
- Peri Peri
- Spanish Creamy and spicy
- Pommes Frites Sauce
- Drei Pfeffer
- Cocktailsauce
- Knoblauchsauce
- Exotic Sauce
- Curry - Mango Sauce
- American Sauce
- Hot Sauce
- Asia - Süß - Sauer
- Currysauce
- Grüner - Pfeffer Sauce
- Honig - Senf - Dill Sauce
- Karibiksauce
- pikante Tomatensauce
- Schaschliksauce
- Mexican Sauce
- Chili - Mango Sauce
- Knoblauchsauce Wasabi Style
- Knoblauch Jalapeño Sauce
- Burger Sauce

Die oben genannten Saucen enthalten meistens Lebensmittelzusatzstoffe, welche geschmacksgebend sein können und/oder andere Funktionen haben. Des Weiteren enthalten viele Saucen weitere Lebensmittelzusatzstoffe, wie Konservierungsmittel, Verdickungsmittel, Säureregulatoren, Farbstoffe und/oder Stabilisatoren.

Vorzugsweise wird für das erfindungsgemäße Flambierverfahren der erfindungsgemäße Spender verwendet, da mit ihm die pastösen Grillsaucen und die erfindungsgemäßen Flambierpasten gleichzeitig und separat auf das Grillgut aufgetragen werden können. Das gleichzeitige, separate Auftragen kann mit dem erfindungsgemäßen Spender sehr gut kontrolliert werden.

Der erfindungsgemäße Spender umfasst ein Zwei- oder Mehrkammersystem, bei dem das Volumen oder die Volumina der Kammer oder der Kammern, die mindestens eine Flambierpaste enthält oder enthalten, kleiner ist oder sind als das Volumen oder die Volumina der Kammer oder der Kammern, die mindestens eine pastöse Grillsauce enthält oder enthalten.

Die mindestens eine, insbesondere eine, Kammer der mindestens einen, insbesondere einen, Flambierpaste und die mindestens eine, insbesondere eine, Kammer der mindestens einen pastösen Grillsauce können über eine luftdicht verschließbare, gemeinsame Austrittsdüse verfügen. Die gemeinsame Austrittsdüse kann eine Düse mit einem kreisrunden oder ovalen Austrittsloch sein. Die Austrittsdüse kann aber auch eine Breitschlitzdüse sein

Bei dieser Ausführungsform des erfindungsgemäßen Spenders ist mindestens eine, insbesondere eine, Kammer, die mindestens, insbesondere eine, eine pastöse Grillsauce enthält, von mindestens eine Kammer, die mindestens eine Flambierpaste enthält, umgeben, wodurch der austretende Pastenstrang den gewünschten Schichtaufbau hat, bei dem eine Schicht aus mindestens einer, insbesondere einer, Flambierpaste einen Strang aus mindestens einer, insbesondere einer, Grillsauce umhüllt.

In einer weiteren Ausführungsform können die mindestens eine, insbesondere eine, Kammer der mindestens einen, insbesondere einen, Flambierpaste und die mindestens eine, insbesondere eine, Kammer der mindestens einen, insbesondere einen, pastösen Grillsauce über jeweils eine eigene luftdicht verschließbare Austrittsdüse verfügen. Vorzugsweise sind die mindestens zwei, insbesondere zwei, Austrittsdüsen konische Hohlkegel, wobei sie vorzugsweise ein kreisrundes oder ein ovales Austrittsloch haben. Die Austrittsdüsen können aber auch Breitschlitzdüsen sein. Sie sind vorzugsweise gleich lang. Dabei kann die mindestens eine, insbesondere eine, Austrittsdüse für die Flambierpaste einen kleineren Durchmesser als die Austrittsdüse für die mindestens eine, insbesondere eine, Grillsauce haben. Außerdem können die mindestens zwei, insbesondere zwei Austrittsdüsen parallel zueinander angeordnet oder gegeneinander geneigt sein.

Jede Austrittsdüse kann ihren eigenen Verschluss haben oder aber es wird ein Verschluss verwendet, der mindestens zwei, insbesondere zwei, Austrittsdüsen gleichzeitig verschließen kann.

Für die schichtförmigen Applikation der mindestens einen, insbesondere einen Flambierpaste, und der mindestens einen, insbesondere einen, pastösen Grillsauce wird der Spender so gehalten, dass sich die mindestens eine, insbesondere eine, Austrittsdüse für die mindestens eine, insbesondere eine, Flambierpaste oberhalb der Austrittsdüse für die mindestens eine, insbesondere eine, pastöse Grillsauce befindet. In dieser Weise resultiert ein flächiger schichtförmiger Aufbau, bei dem die Schichten wie folgt übereinander liegen:
**Oberfläche des Grillguts/pastöse Grillsauce/pastöse Flambierpaste,** wenn der Spender über das Grillgut hinweg bewegt wird.

Der gleichzeitige separate Austritt der mindestens einen, insbesondere einen, Flambierpaste und der mindestens einen, insbesondere einen, pastösen Grillsauce kann durch den Aufbau von äußerem und/oder innerem Druck auf die Kammern und/oder in den Kammern hergestellt und geregelt werden. Zu diesem Zweck kann der erfindungsgemäße Spender aus flexiblen Materialien, vorzugsweise Kunststoffen, die zusammen gedrückt werden können und gegebenenfalls in ihre ursprüngliche Form zurückkehren, aufgebaut sein. Wenn ein innerer Druck aufgebaut werden soll, ist der erfindungsgemäße Spender vorzugsweise aus Metall aufgebaut.

Die nachstehend beschriebenen Ausführungsformen sind nur beispielhaft und nicht abschließend aufgeführt. Die Beispiele sollen demnach die Vielfalt der Möglichkeiten verdeutlichen, und der Fachmann kann aufgrund seines allgemeinen Fachwissens ohne Weiteres weitere Möglichkeiten angeben. Es versteht sich daher, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen.

### Beispiel 1

### Flambierpaste FP mit pastöser Grillsauce GS

Zur Herstellung der Flambierpasten FP wurde Gelatine und Alkohol gemischt. Zu diesem Zweck wurde die Gelatine während 10 Minuten in Wasser angequollen. Der Alkohol wurde leicht erwärmt und in die angequollene Gelatine eingerührt, bis eine homogene Mischung entstanden war. Das Mischungsverhältnis konnte beliebig angepasst werden, je nachdem, wie fest bzw. viskos man die Flambierpaste FP einstellen wollte.

Parallel dazu wurde eine Barbecuesauce als Grillsauce GS hergestellt.

Die Flambierpaste FP und die Grillsauce GS wurden in eine Kunststoffflasche (Spender 1) mit zwei Kammern 1.1 und 1.2, die eine gemeinsame, luftdicht verschließbare Austrittsöffnung aufwiesen, eingefüllt. Die Kammer 1.1 der Flambierpaste FP war kleiner als die der Grillsauce GS (Kammer 1.2), da die Flambierpaste FP nicht eins zu eins mit der Grillsauce GS dosiert werden sollte. Durch Drücken der Flasche konnte die Sauce GS mit der Paste FP auf das gewünschten Grillgut wie beispielsweise Steaks als Strang, bei dem die Flambierpaste FP die Grillsauce GS umhüllte, appliziert werden. Durch das Anzünden der Flambierpaste FP wurde die Grillsauce GS flambiert, und der Zucker, der sich in der Grillsauce befindet, wurde karamellisiert. Hierdurch entstand ein weiterer Geschmacksträger, der das gegarte Grillgut besonders schmackhaft machte.

### Beispiel 2

### Spender 1 mit Flambierpaste FP und pastöser Grillsauce GS

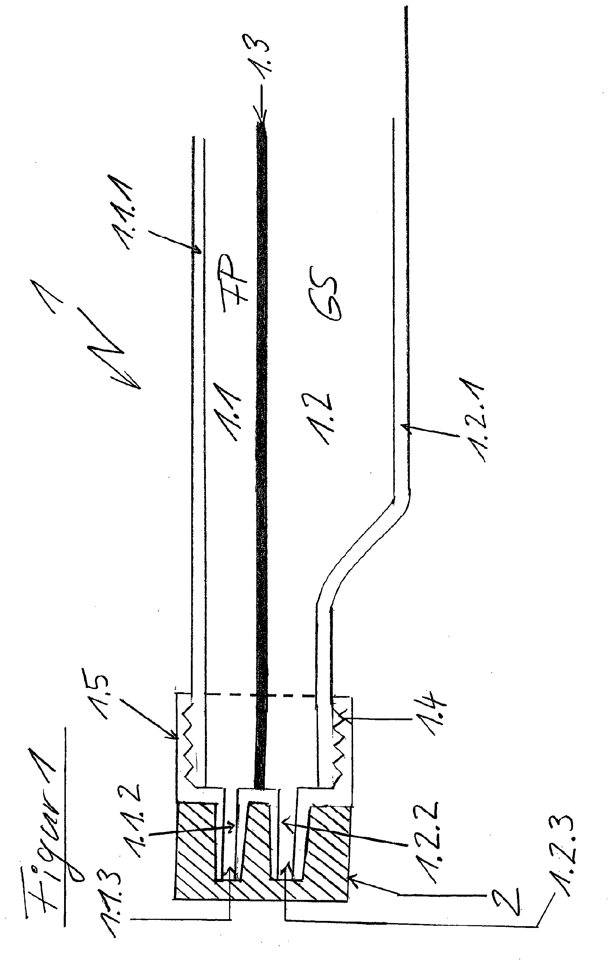

Die Figur 1 zeigt einen Längsschnitt durch einen Spender 1 mit zwei Kammern 1.1, 1.2.

In der Figur 1 haben die Bezugszeichen die folgende Bedeutung:
- 1: Spender aus Kunststoff
- 1.1: Kammer für die Flambierpaste FP
- 1.1.1: Kammerwand
- 1.1.2: Konische Austrittsdüse
- 1.1.3: Kreisrunde Austrittsöffnung
- 1.2: Kammer für die pastöse Grillsauce GS
- 1.2.1: Kammerwand
- 1.2.2: Konische Austrittsdüse
- 1.2.3: Kreisrunde Austrittsöffnung
- 1.3: Trennwand
- 1.4: Gewinde
- 1.5: Aufschraubbarer Träger der Austrittsdüse 1.1.2 und 1.2.2
- 2: Abnehmbare Verschlusskappe für beide Austrittsdüsen 1.1.2 und 1.2.2
- FP: Flambierpaste
- GS: Pastöse Grillsauce

Der Spender 1 war eine oben offene Standflasche aus flexiblem Kunststoff mit flachem Boden. Er war insgesamt 30 cm lang und sein größter Durchmesser lag bei 12 cm. Die Wandstärke seiner Kammerwände 1.1.1 und 1.2.1 und seines Bodens betrug 3 mm. Der horizontale Umriss jeder Kammerwand 1.1.1 und 1.2.1 war ein entsprechend dimensioniertes Kreissegment. Der Spender 1 wurde durch eine bezüglich der beiden Austrittsdüsen 1.2.2 und 1.1.2 mittig angeordnete Trennwand 1.3 aus dem flexiblen Kunststoff in eine Kammer 1.1 für die Flambierpaste FP des Beispiels 1 und in eine Kammer 1.2 für die Grillsauce GS des Beispiels 1 unterteilt. Das Volumenverhältnis von Kammer 1.1 zu Kammer 1.2 lag bei 1:10. Die Kammerwand 1.2.1 verjüngte sich in Richtung des Gewindes 1.4, sodass sich die mittige Anordnung der Trennwand 1.3 ergab. Die beiden konischen Austrittsdüsen 1.1.2 und 1.2.2 waren jeweils 1 cm lang und wiesen jeweils eine kreisrunde Austrittsöffnung 1.1.3 und 1.2.3 auf. Sie wurden mithilfe des aufschraubbaren Trägers 1.5 auf die gefüllte offene Standflasche geschraubt (Gewinde 1.4). Die beiden Austrittsöffnungen 1.1.3 und 1.2.3 waren mithilfe der abnehmbaren Verschlusskappe 2 verschlossen.

Vor dem Gebrauch des Spenders 1 wurde die abnehmbare Verschlusskappe 2 abgenommen und bei dem Gebrauch der Spender 1 so über das Grillgut geführt, dass die Austrittsdüse 1.1.2 oberhalb der Austrittsdüse 1.2.2 angeordnet war. Durch Druck auf die Kammerwände 1.1.1 und 1.2.1 wurden die Flambierpaste FP und die Grillsauce GS gleichzeitig schichtweise flächig auf das Grillgut appliziert. Die Flambierpaste FP wurde entzündet und die Grillsauce flambiert. Dadurch wurde der Zucker, der sich in der Grillsauce befand, karamellisiert, wodurch ein weiterer Geschmacksträger resultierte, der das Grillgut ganz besonders schmackhaft machte.

## Patentansprüche

1. Verfahren zum Flambieren von Grillgut, mit mindestens einer Flambierpaste (FP) für Grillgut, enthaltend mindestens ein durch reinen Alkohol gequollenes und/oder geliertes Geliermittel und/oder Verdickungsmittel sowie reinen Alkohol in einer Konzentration, so dass er die Verbrennung bis zu seinem vollständigen Verbrauch aufrechterhält, **dadurch gekennzeichnet,**
**dass** man mindestens eine Grillsauce (GS) gleichzeitig mit mindestens einer Flambierpaste (FP) in der Reihenfolge
Oberfläche des Grillguts/pastöse Grillsauce(n) (GS) /pastöse Flambierpaste(n) (FP) schichtweise auf das Grillgut aufträgt und die Flambierpasten (FP) mit einer Zündquelle entzündet.

2. Verfahren zum Flambieren von Grillgut nach Anspruch 1, **dadurch gekennzeichnet, dass**, die Flambierpaste (FP) bezogen auf ihre Gesamtmenge, 5 bis 50 Gew.-% reinen Alkohols enthält.

3. Verfahren zum Flambieren von Grillgut nach Anspruch 1 oder 2, **dadurch gekennzeichnet, dass** die Flambierpaste (FP) Wasser als Gelierhilfsmittel enthält.

4. Verfahren zum Flambieren von Grillgut nach einem der Ansprüche 1 bis 3, **dadurch gekennzeichnet, dass** das Geliermittel und/oder Verdickungsmittel aus der Gruppe, bestehend aus Gelatine, Alginsäure, Natriumalginat, Kaliumalginat, Calciumalginat, Propylenglykolalginat, Agar-Agar, Carrageen, Furcelleran, Johannisbrotkernmehl, Guarkernmehl, Traganth, Gummiarabicum, Xanthan, Karaya, Tarakernmehl, Gellan, Pektine, amidierte Pektine, mikrokristalline Cellulose, Methylcellulose, Ethylcellulose, Hydroxypropylcellulose Hydroxypropylmethylcellulose, Methylethylcellulose, Carboxymethylcellulose, Natriumcarboxymethylcellulose, Gliadin, Secalin, Avenin, Hordein, Zein, Oryzin und Kafirin sowie den modifizierten Stärken E 1400, E 1401, E 1402, E 1403, E 1404, E 1405, E 1410, E 1412, E 1413, E 1414, E 1420, E 1421, E 1422, E 1423, E 1430, E 1440, E 1441, E 1442, E 1450 und E1451, ausgewählt wird oder werden.

5. Verfahren zum Flambieren von Grillgut nach einem der Ansprüche 1 bis 4, **dadurch gekennzeichnet, dass** die Flambierpaste (FP) Gewürze, Aromastoffe, lebensmittelrechtlich zugelassene Farbstoffe und/oder zerkleinerte und/oder pastöse Lebensmittel enthält.

6. Verfahren zum Flambieren von Grillgut nach einem der Ansprüche 1 bis 5, **dadurch gekennzeichnet, dass** man hierfür einen Spender (1) zum gleichzeitigen Auftragen von pastösen Grillsaucen (GS) und Flambierpasten FP auf das Grillgut verwendet, wobei der Spender 1 ein Zwei- oder Mehrkammersystem mit einer oder mehreren ersten Kammern (1.1) und einer oder mehreren zweiten Kammern (1.2), umfasst und wobei das Volumen oder die Volumina der ersten Kammer (1.1) oder der ersten Kammern (1.1), die mindestens eine Flambierpaste (FP) enthält oder enthalten, kleiner ist oder sind als das Volumen oder die Volumina der **zweiten Kammer (1.2) oder der zweiten** Kammern (1.2), die mindestens eine pastöse Grillsauce (GS) enthält oder enthalten.

7. Verfahren zum Flambieren von Grillgut nach Anspruch 6, **dadurch gekennzeichnet, dass** die mindestens eine erste Kammer (1.1) der mindestens einen Flambierpaste (FP) und die mindestens eine zweite Kammer (1.2) der mindestens einen pastösen Grillsauce (GS) über eine luftdicht verschließbare, gemeinsame Austrittsdüse verfügen.

8. Verfahren zum Flambieren von Grillgut nach Anspruch 6, **dadurch gekennzeichnet, dass** die mindestens eine erste Kammer (1.1) der mindestens einen Flambierpaste (FP) für Grillgut, enthaltend mindestens ein durch reinen Alkohol gequollenes und/oder geliertes Geliermittel und/oder Verdickungsmittel sowie reinen Alkohol in einer Konzentration, so dass er die Verbrennung bis zu seinem vollständigen Verbrauch aufrechterhält, und die mindestens eine zweite Kammer (1.2) der mindestens einen pastösen Grillsauce (GS) über jeweils eine eigene luftdicht verschließbare Austrittsdüse (1.1.2 und 1.2.2) verfügen.

9. Verfahren zum Flambieren von Grillgut nach Anspruch 8, **dadurch gekennzeichnet, dass** der gleichzeitige separate Austritt der mindestens einen Flambierpaste (FP) für Grillgut, enthaltend mindestens ein durch reinen Alkohol gequollenes und/oder geliertes Geliermittel und/oder Verdickungsmittel sowie reinen Alkohol in einer Konzentration, so dass er die Verbrennung bis zu seinem vollständigen Verbrauch aufrechterhält, und der mindestens einen pastösen Grillsauce (GS) durch Aufbau von äußerem und/oder innerem Druck auf die Kammern (1.1 und 1.2) und oder in den Kammern (1.1 und 1.2) hergestellt und geregelt ist.

10. Verfahren zum Flambieren von Grillgut nach einem der Ansprüche 6, 8 oder 9, **dadurch gekennzeichnet, dass** der Spender (1) für den gleichzeitigen separaten Austritt der mindestens einen Flambierpaste (FP) für Grillgut, enthaltend mindestens ein durch reinen Alkohol gequollenes und/oder geliertes Geliermittel und/oder Verdickungsmittel sowie reinen Alkohol in einer Konzentration, so dass er die Verbrennung bis zu seinem vollständigen Verbrauch aufrechterhält, und der mindestens einen pastösen Grillsauce (GS) derart über das Grillgut geführt wird, dass die Austrittsdüse (1.1.2) mit der Austrittsöffnung (1.1.3) oberhalb der Austrittsdüse (1.2.2) mit der Austrittsöffnung (1.2.3) angeordnet ist.

11. Spender (1) zum gleichzeitigen Auftragen von pastösen Grillsaucen (GS) und Flambierpasten FP auf das Grillgut, wobei der Spender (1) ein Zwei- oder Mehrkammersystem umfasst, worin das Volumen oder die Volumina der ersten Kammer (1.1) oder der ersten Kammern (1.1), kleiner ist oder sind als das Volumen oder die Volumina der zweiten Kammer (1.2) oder der zweiten Kammern (1.2), die mindestens eine pastöse Grillsauce (GS) enthält oder enthalten, **dadurch gekennzeichnet, dass** die erste Kammer (1.1) oder ersten Kammern (1.1) mindestens eine Flambierpaste (FP) für Grillgut, enthalten, welche mindestens ein durch reinen Alkohol gequollenes und/oder geliertes Geliermittel und/oder Verdickungsmittel sowie reinen Alkohol in einer Konzentration, so dass er die Verbrennung bis zu seinem vollständigen Verbrauch aufrechterhält, und dass die mindestens eine erste Kammer (1.1) und die mindestens eine zweite Kammer (1.2) über jeweils eine eigene luftdicht verschließbare Austrittsdüse (1.1.2 und 1.2.2) verfügen und wobei die Austrittsdüsen (1.1.2 und 1.2.2) Breitschlitzdüsen sind.

12. Spender (1) nach Anspruch 11, **dadurch gekennzeichnet, dass** die Breitschlitzdüsen (1.1.2 und 1.2.2) gleich lang sind.

## Claims

1. Method of flambéing grilling products with at least one flambéing paste for grilling products, containingat least one gelling agent and/or thickening agent which is soaked and/or gelled by pure alcohol and pure alcohol in a concentration that maintains combustion until its complete consumption, **characterized in that** at least one grilling sauce (GS) is simultaneously applied together with at least one flambéing paste (FP) in layers onto the grilling products in the order
**Surface of the grilling product / pasty grilling sauce** / **pasty flambéeing paste,** and the flambéing paste is ignited with an ignition source.

2. Method for flambéing grilling products according to claim 1, **characterized in that** the flambéing pastes (FP) contain 5 to 50 wt .-% of pure alcohol based on their total amount.

3. Method for flambéing grilling products according to claim 1 or 2, **characterized in that** the flambéing pastes (FP) contain water as gelling agent.

4. Method for flambéing grilling products according to one of claims 1 to 3, **characterized in that** the gelling agent and/or thickening agent is or are selected from the group consisting of gelatin, alginic acid, sodium alginate, potassium alginate, calcium alginate, propylene glycol alginate, agar-agar, carrageenan, furcelleran, locust bean gum, Guar gum, tragacanth, gum arabic, xanthan gum, karaya, tara gum, gellan, pectins, amidated pectins, microcrystalline cellulose, methylcellulose, ethylcellulose, hydroxypropylmethylhydroxypropylmethylcellulose, methylethylcellulose, carboxymethylcellulose, sodium carboxymethylcellulose, gliadin, secalin, avenin, hordein, zein, oryzine and kafirin and modified starches E 1400, E 1401, E 1402, E 1403, E 1404, E 1405, E 1410, E 1412, E 1413, E 1414, E 1420, E 1421, E 1422, E 1423, E 1430, E 1440, E 1441, E 1442, E 1450 and E1451.

5. Method for flambéing grilling products according to one of claims 1 to 4, **characterized in that** the flambéing pastes (FP) contain spices, flavorings, food approved dyes and/or crushed and/or pasty foods.

6. Method for flambéing grilling products according to one of claims 1 to 5, **characterized in that** a dispenser (1) for the simultaneous application of pasty grilling sauces GS and flambéing pastes (FP) on a grilling product is used, the dispenser (1) comprising
a two-chamber or multi-chamber system, wherein
the volume or volumes of the first chamber (1.1) or the first chambers (1.1) containing at least one flambéing paste FP is smaller than the volume or volumes of the second chamber (1.2) or the second chambers (1.2), which contains or contain at least one pasty grilling sauce (GS).

7. Method for flambéing grilling products according to claim 6, **characterized in that** the at least one first chamber (1.1) of the at least one flambéing paste (FP) for grilling products, and the at least one second chamber (1.2) of the at least one pasty grilling sauce (GS) have an airtight sealable, common outlet nozzle.

8. Method for flambéing grilling products according to claim 6, **characterized in that** the at least one first chamber (1.1) of the at least one flambéing paste (FP) containing at least one gelling agent and/or thickening agent which is soaked and/or gelled by pure alcohol and pure alcohol in a concentration that maintains combustion until its complete consumption, and the at least one second chamber (1.2) of at least one pasty grilling sauce (GS) each have their own airtight sealable outlet nozzle (1.1.2) and (1.2.2).

9. Method for flambéing grilling products according to claim 8, **characterized in that** the simultaneous separate exit of the at least one flambéing paste (FP) for grilling products containing at least one gelling agent and/or thickening agent which is soaked and/or gelled by pure alcohol and pure alcohol in a concentration that maintains combustion until its complete consumption, and of the at least one pasty grilling sauce (GS) is obtained and controlled by building up of an external pressure on and/or an internal pressure in the chambers (1.1) and (1.2) and/or in the chambers (1.1) and (1.2).

10. Method for flambéing grilling products according to claim 6, 8 or 9, **characterized in that**, in order to obtain the simultaneous separate exit of the at least one flambéing paste (FP) for grilling products containing at least one gelling agent and/or thickening agent which is soaked and/or gelled by pure alcohol and pure alcohol in a concentration that maintains combustion until its complete consumption, and of the at least one pasty grilling sauce (GS), the dispenser (1) is guided over the grilling product such that the outlet nozzle (1.1.2) with the outlet opening (1.1.3) is arranged above the outlet nozzle (1.2.2) with the outlet opening (1.2.3).

11. Dispenser (1) for the simultaneous application of pasty grilling sauces (GS) and flambéing pastes (FP) on the grilling product, wherein the dispenser (1) comprises a two- or a multi-chamber system, wherein the volume or the volumes of the first chamber (1.1) or of the first chambers (1.1) is or are smaller than the volume or the volumes of the second chamber (1.2) or of the second chambers (1.2) which contains or contain at least one pasty grilling sauce, **characterized in that** the first chamber (1.1) or the first chambers (1.1) contains or contain at least one gelling agent and/or thickening agent which is soaked and/or gelled by pure alcohol and pure alcohol in a concentration that maintains combustion until its complete consumption, and that the at least one first chamber (1.1) and the at least one second chamber (1.2) each have their own airtight sealable outlet nozzle (1.1.2) and (1.2.2) and whereby the outlet nozzles (1.1.2) and (1.2.2) are wide slot dies.

12. Dispenser (1) according to claim 11, **characterized in that** the wide slot dies (1.1.2) and (1.2.2) are of equal length.

## Revendications

1. Procédé de flambage de produits à griller avec au moins une pâte flambée pour produits à griller, contenant au moins un gélifiant et / ou un épaississant imbibé et / ou gélifié par de l'alcool pur et de l'alcool pur dans une concentration qui maintient la combustion jusqu'à sa consommation complète, **caractérisé en ce qu'**au moins une sauce à griller (GS) est appliquée simultanément avec au moins une pâte à flamber (FP) en couches sur les produits à griller dans l'ordre
**Surface du produit à griller / sauce pâteuse à griller / pâte flambée pâteuse,**
et la pâte flambée est enflammée avec une source d'allumage.

2. Procédé de flambage de produits à griller selon la revendication 1, **caractérisé en ce que** les pâtes flambées (FP) contiennent 5 à 50 % en poids-% d'alcool pur sur la base de leur quantité totale.

3. Procédé de flambage de produits à griller selon la revendication 1 ou 2, **caractérisé en ce que** les pâtes flambées (FP) contiennent de l'eau comme gélifiant.

4. Procédé de flambage de produits à griller selon l'une des revendications 1 à 3, **caractérisé en ce que** l'agent gélifiant et / ou épaississant est ou sont choisi dans le groupe constitué par la gélatine, l'acide alginique , l'alginate de sodium, l'alginate de potassium, l'alginate de calcium, propylene glycol alginate, agar-agar, le carraghénane, le furcellerane, la gomme de caroube, la gomme guar, la gomme adragante, la gomme arabique, la gomme xanthane, la gomme de karaya, tara gum, le gellane , les pectines, amidées pectines, la cellulose microcristalline, la méthylcellulose, l'éthylcellulose, hydroxypropylmethylhydroxypropylmethylcellulose, methylethylcellulose, la carboxyméthylcellulose, sodium carboxyméthylcellulose, la gliadine, la sécaline, avénine, hordéine, zéine, oryzine et kafirine et modifiés amidons E 1400, E 1401, E 1402, E 1403, E 1404, E 1405, E 1410, E 1412, E 1413, E 1414, E 1420, E 1421, E 1422, E 1423, E 1430, E 1440, E 1441, E 1442, E 1450 et E1451.

5. Procédé de flambage de produits à griller selon l'une des revendications 1 à 4, **caractérisé en ce que** les pâtes flambées (FP) contiennent des épices, des arômes, des colorants alimentaires agréés et / ou des aliments broyés et / ou pâteux.

6. Procédé de flambage de produits à griller selon l'une des revendications 1 à 5, **caractérisé en ce qu'**on utilise un distributeur (1) pour l'application simultanée de sauces pâteuses à griller (GS) et de pâtes à flamber (FP) sur un produit à griller, le distributeur (1) comprenant
un système à deux chambres ou à plusieurs chambres, dans lequel
le volume ou les volumes de la première chambre (1.1) ou des premières chambres (1.1) contenant au moins une pâte de flambage FP sont inférieurs au ou aux volumes de la deuxième chambre (1.2) ou des deuxièmes chambres (1.2), qui contient ou contenir au moins une sauce à griller pâteuse (GS).

7. Procédé de flambage de produits à griller selon la revendication 6, **caractérisé en ce que** au moins une première chambre (1.1) de au moins une pâte à flamber (FP) pour griller des produits, et au moins une deuxième chambre (1.2) de au moins une sauce pâteuse à griller (GS) possède une buse de sortie commune étanche à l'air.

8. Procédé pour flamber les produits à griller selon la revendication 6, **caractérisé en ce que** au moins une première chambre (1.1) de au moins une pâte à flamber (FP) contenant au moins un agent gélifiant et / ou un agent épaississant qui est trempée et / ou gélifiée par de l'alcool pur et de l'alcool pur dans une concentration qui maintient la combustion jusqu'à sa consommation complète, et au moins une deuxième chambre (1.2) d'au moins une sauce pâteuse à griller (GS) ont chacune leur propre buse de sortie étanche à l'air (1.1.2) et (1.2.2).

9. Procédé de flambage de produits à griller selon la revendication 8, **caractérisé en ce que** la sortie séparée simultanée de au moins une pâte à flamber (FP) pour griller des produits contenant au moins un gélifiant et / ou épaississant imbibé et / ou gélifié par de l'alcool pur et de l'alcool pur dans une concentration qui maintient la combustion jusqu'à sa consommation complète , et de au moins une sauce pâteuse à griller (GS) est obtenue et contrôlée par création d'une pression externe et / ou d'une pression interne dans les chambres (1.1) et ( 1.2) et / ou dans les chambres (1.1) et (1.2) .

10. Procédé de flambage de produits à griller selon la revendication 6, 8 ou 9, **caractérisé en ce que**, pour obtenir la sortie séparée simultanée de au moins une pâte flambée (FP) pour griller des produits contenant au moins un gélifiant et / ou agent épaississant qui est imbibé et / ou gélifié par de l'alcool pur et de l'alcool pur dans une concentration qui maintient la combustion jusqu'à sa consommation complète, et d'au moins une sauce pâteuse à griller (GS), le distributeur (1) est guidé sur le produit à griller de sorte que la buse de sortie (1.1.2) avec l'ouverture de sortie (1.1.3) est disposée au-dessus de la buse de sortie (1.2.2) avec l'ouverture de sortie (1.2.3).

11. Distributeur (1) pour l'application simultanée de sauces à griller pâteuses (GS) et de pâtes flambées (FP) sur le produit à griller, dans lequel le distributeur (1) comprend un système à deux ou plusieurs chambres, dans lequel le volume ou le les volumes de la première chambre (1.1) ou des premières chambres (1.1) sont ou sont inférieurs au volume ou aux volumes de la deuxième chambre (1.2) ou des deuxièmes chambres (1.2) qui contient ou contiennent au moins un grillage pâteux sauce, **caractérisée en ce que** la première chambre (1.1) ou les premières chambres (1.1) contient ou contiennent au moins un gélifiant et / ou un épaississant imbibé et / ou gélifié par de l'alcool pur et de l'alcool pur à une concentration qui maintient la combustion jusqu'à sa consommation complète, et que au moins une première chambre (1.1) et au moins une seconde chambre (1.2) ont chacune leur propre buse de sortie étanche à l'air (1.1.2) et (1.2.2) et les buses de sortie (1.1.2) et (1.2.2) sont des buses à fente large.

12. Distributeur (1) selon la revendication 11, **caractérisé en ce que** les matrices à fente large (1.1.2) et (1.2.2) sont de longueur égale.
